(19) Europäisches Patentamt / European Patent Office / Office européen des brevets

(11) **EP 2 498 189 A1**

(12) **EUROPEAN PATENT APPLICATION**

(43) Date of publication:
 **12.09.2012 Bulletin 2012/37**

(51) Int Cl.:
 **G06F 17/11** *(2006.01)*  **G05B 13/04** *(2006.01)*

(21) Application number: **11157244.2**

(22) Date of filing: **07.03.2011**

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**

(71) Applicant: **Honeywell spol s.r.o.**
 **14800 Prague 4 (CZ)**

(72) Inventors:
 • **Trnka, Pavel**
  **15500, Czech Republic (CZ)**
 • **Pekar, Jaroslav**
  **39501, Pacov (CZ)**

(74) Representative: **Buckley, Guy Julian**
 **Patent Outsourcing Limited**
 **1 King Street**
 **Bakewell**
 **Derbyshire DE45 1DZ (GB)**

(54) **Optimization problem solving**

(57)  Optimization problem solving is described herein. For example, one or more method embodiments include assigning one of a number of predefined values to each of a number of shadow prices of the system, distributing the assigned predefined shadow price values to a number of sub-problems, wherein each sub-problem is associated with one of a number of subsystems of the system, performing an analysis, wherein the analysis includes determining a parametric solution and a region of validity for each of the number of sub-problems, determining an intersection of the regions of validity of all the parametric solutions, determining whether the optimization problem is solved from the parametric solutions of the number of sub-problems, determining one or more shadow price updates based on the parametric solutions, and distributing the updated shadow prices to sub-problems having a region of validity that does not include the updated shadow prices, and repeating the analysis using the updated shadow prices until the optimization problem is solved from the parametric solutions of the number of sub-problems.

*Fig. 1*

**Description**

Technical Field

The present disclosure relates to optimization problem solving.

Background

Complex systems, such as, for example, mechanical systems, electrical systems, manufacturing systems, fluid systems, chemical systems, biological systems, and/or resource distribution systems, can have a number of optimization problems associated therewith that may need to be solved. Solving a problem associated with a system (e.g., optimizing the operation of a system) may include minimizing and/or maximizing a quadratic cost function under linear equality and inequality constraints by systematically choosing the values of a number of variables within the function.

A complex system can include a number of interrelated subsystems having properties and/or solutions with similar patterns. For example, a water distribution network may include tanks, pumps, valves, interconnection nodes, water sources, and points of water consumption, among other types of subsystems. Solving a problem associated with such a system may include, for example, ensuring that water demands are satisfied in all points of consumption, minimizing electricity usage, ensuring tank levels are kept above a threshold, and/or minimizing long water storage in tanks, among other problems.

However, solving optimization problems of a complex system having a number of interrelated subsystems having properties and/or solutions with similar patterns can be time consuming and/or use a large amount of computing resources. Further, some such problems associated with a complex system may be unsolvable with current processes due to their complexity.

Brief Description of the Drawings

Figure 1 illustrates a method of solving an optimization problem of a system in accordance with one or more embodiments of the present disclosure.

Figure 2 illustrates a system for solving an optimization problem of a system in accordance with one or more embodiments of the present disclosure.

Figure 3 illustrates another system for solving an optimization problem of a system in accordance with one or more embodiments of the present disclosure.

Figure 4 illustrates another method of solving an optimization problem of a system in accordance with one or more embodiments of the present disclosure.

Detailed Description

Optimization problem solving is described herein. For example, one or more method embodiments include assigning one of a number of predefined values to each of a number of shadow prices of the system, distributing the assigned predefined shadow price values to a number of sub-problems, wherein each sub-problem is associated with one of a number of subsystems of the system, performing an analysis, wherein the analysis includes determining a parametric solution and a region of validity for each of the number of sub-problems, determining an intersection of the regions of validity of all the parametric solutions, determining whether the optimization problem is solved from the parametric solutions of the number of sub-problems, determining one or more shadow price updates based on the parametric solutions, and distributing the updated shadow prices to sub-problems having a region of validity that does not include the updated shadow prices, and repeating the analysis using the updated shadow prices until the optimization problem is solved from the parametric solutions of the number of sub-problems.

One or more embodiments of the present disclosure may solve a problem of a system in a short time period (e.g., real time) and/or use a small amount of computing resources. For example, one or more embodiments of the present disclosure may solve a problem of a system in a finite number of iterations. For instance, one or more embodiments of the present disclosure may solve a problem of a system by repeating and/or partially repeating only a portion of the steps of the method. Additionally, one or more embodiments of the present disclosure may solve a problem of a complex system having many variables and/or subsystems without sacrificing precision.

In the following detailed description, reference is made to the accompanying drawings that form a part hereof. The drawings show by way of illustration how one or more embodiments of the disclosure may be practiced. These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

As used herein, "a" or "a number of" something can refer to one or more such things. For example, "a number of controllers" can refer to one or more controllers.

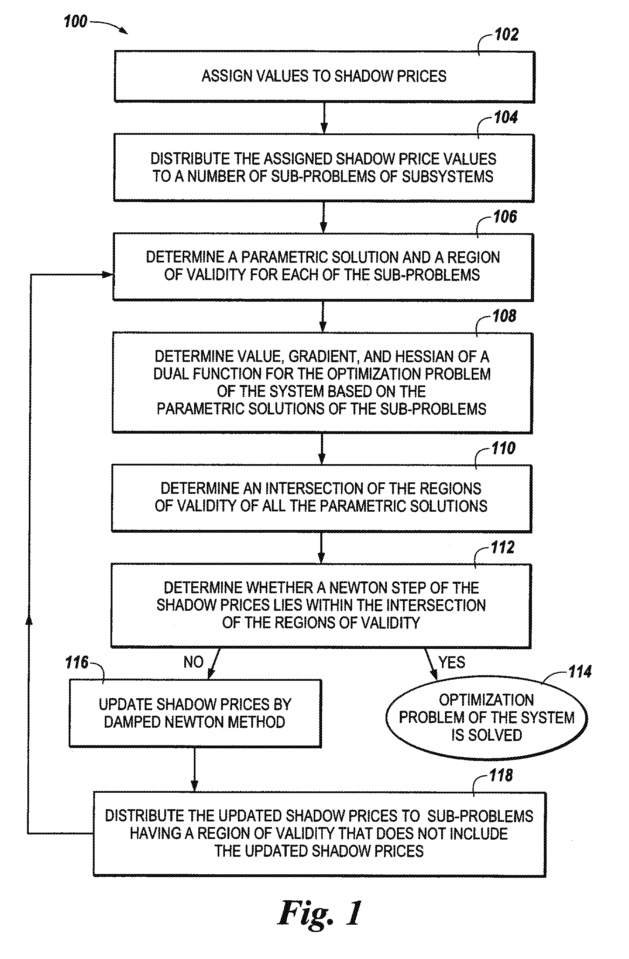

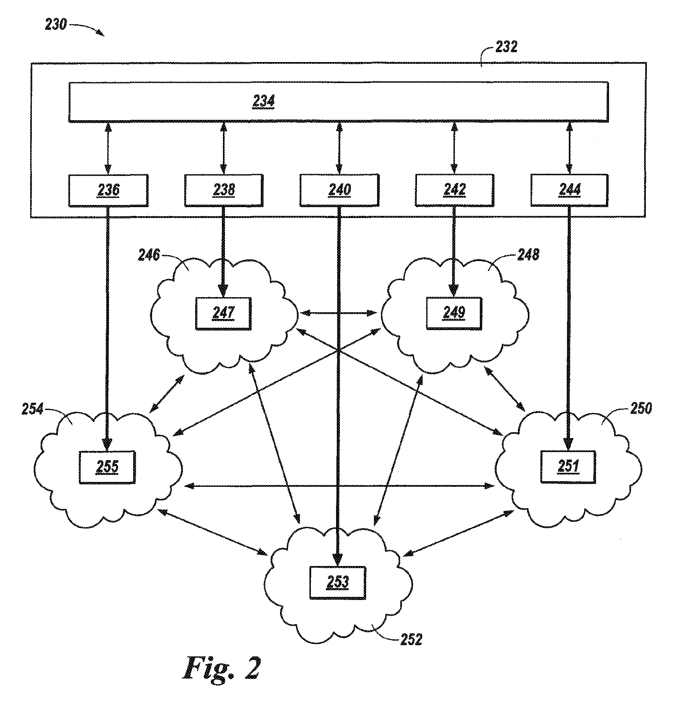

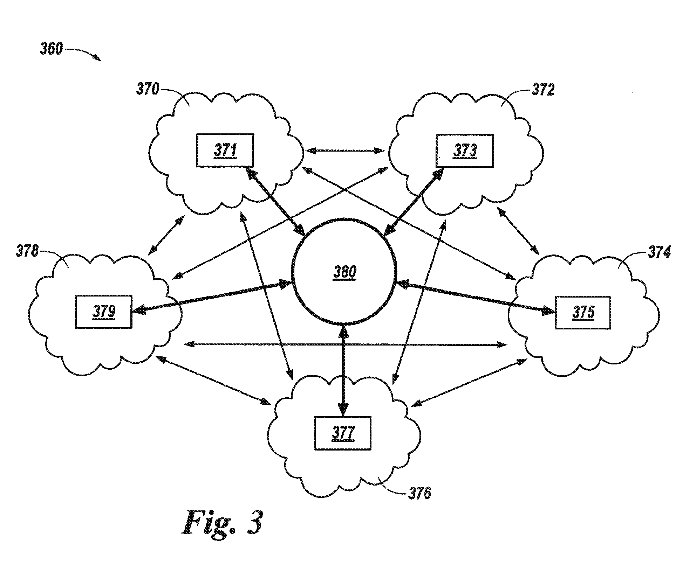

Figure 1 illustrates a method 100 of solving a problem of a system in accordance with one or more embodiments of the present disclosure. The method can be performed by a computing device and/or system, such as, for example, those further described herein in connection with Figures 2 and/or 3. Unless explicitly stated, the method embodiments described herein are not constrained to a particular order or sequence. Additionally, some of the described method embodiments, or elements thereof, can occur or be performed at the same, or substantially the same, point in time.

The system can include a number of interrelated subsystems having properties and/or solutions with similar patterns. For example, a system such as a water distribution network can include a number of interconnected subsystems. The interconnected subsystems can include a number of components such as tanks, pumps, valves, interconnection nodes, water sources, and/or points of water consumption, among other components. Additionally, these components themselves can individually constitute a subsystem (e.g., a pump can be a subsystem of the system). The interconnected nature of the subsystems can cause activity in one subsystem to affect activity at a different subsystem. For example, activity at a pump within a subsystem can affect any number of the additional subsystems in the water distribution network (e.g., a pump switching off can affect levels in interconnected storage tanks).

Solving a problem of a system can include, for example, an optimization (e.g., minimization or maximization) of a quadratic cost function under a number of linear constraints. For example, the system can include a number of variables, and solving a problem of the system can include minimizing or maximizing a real function by systematically choosing the values of a number of the variables from within an allowed set (e.g., constraints). However, solving a problem of a system is not limited to minimizing or maximizing one function, indeed, solving a problem of a system can include minimizing and/or maximizing a number of functions simultaneously.

In the example of a water distribution network, the quadratic cost function can be, for example, the cost (e.g., monetary cost) of meeting water demands. Solving a problem of the system (e.g., the water distribution network) can include minimizing this function by manipulating the value of a number of variables in the system. The variables of the system can include, in the example of the water distribution network, pump and/or valve flow rates, tank levels, and water source flow rates, among other variables. The variables can be manipulated; however, manipulation can be subject to a number of constraints, such as, for example, operating capabilities, and/or manually-set limits on subsystem operation, among other constraints. In the example of the water distribution network, constraints can include, for example, maximum and/or minimum flow rates through valves (e.g., based on valve size), acceptable water levels in tanks, and/or output capabilities of pumps (e.g., based on limits set on pump output rate), among other constraints. The variables of the subsystems and/or system can be assigned real-number values subject to their corresponding constraints.

Accordingly, solving a problem of a system can include solving problems of the subsystems of the system with attention paid to the interconnected nature of the subsystems. Ultimately, the solution to the problem of the system can include determining the appropriate value of a number of variables that result in a minimization or maximization of the quadratic cost function of the system.

At block 102 of Figure 1, method 100 includes assigning values to shadow prices. A shadow price can be, for example, the change in value of the solution to the optimization problem (e.g., a function) arising from a change in a linear equality and/or inequality constraint. Assigning values to shadow prices can include assigning real numbers as values.

At block 104, method 100 includes distributing the shadow price values to a number of sub-problems of sub-systems. As discussed below with reference to Figures 2 and 3, a coordinator can be communicatively linked with the number of subsystems in the system. The coordinator can distribute the shadow price values that were assigned, according to block 102, to the subsystems.

At block 106, method 100 includes determining a parametric solution and a region of validity for each of the sub-problems. Each of the sub-problems can include, for example, the sub-problems to which shadow prices were distributed in accordance with one or more embodiments of the present disclosure. A parametric solution can be a solution (e.g., a solution to a problem of a subsystem) that is valid for more than a single value of a number of given shadow prices; it can be valid anywhere within the region of validity. In an example of a water distribution network, a parametric solution to a problem of flow between two subsystems can be $100+2\lambda$ m$^3$/hr. (where $\lambda$ is shadow price). In this example, output is determined using a scalar shadow price; however, method 100 is not limited to scalar shadow prices; rather, a parametric solution can, for example, encompass multidimensional functions.

A parametric solution can be associated with a region of validity. The region of validity can be a region (e.g.,

a set of numeric values) within which the parametric solution can be valid. Thus, in the previous example, the parametric solution can be valid for a range of λ values. For example, the parametric solution can be valid if λ falls in a range of numbers (e.g., λ is between 0.5 and 2).

Conversely, a parametric solution can be invalid for values of a shadow price that fall outside the region of validity. For example, the parametric solution: 100+2λ with a region of validity of from 0.5 to 2 can be considered to be invalid if λ is, for example, 3.67.

Though a region of validity, as used in an example herein, can be a numeric interval, region of validity is not limited to a numeric interval; rather, region of validity can encompass complex numerical sets. For example, a parametric solution can be valid for a convex polytop of shadow price values.

Each subsystem to which a shadow price value was distributed can determine its corresponding parametric solution and validity region. Thus, depending on such features as the size and/or complexity of the sub-systems, a number of multidimensional parametric solutions and multidimensional validity regions can be sent from the subsystems back to the coordinator, as discussed below in reference to Figures 2 and 3.

Solving an optimization problem of a system can include, for example, determining a solution to:

$$\min_{x,y} \sum_{i=1}^{N} J_i\ (x_i, y_i) \quad s.t. \quad (x_i, y_i) \in C_i,\ My = n,$$

where $J_i$ can be quadratic functions, $C_i$ can be linear constraints, $x_i$ and $y_i$ can be parts of x and y respectively. x and y can represent optimized variables of parts of subsystems. For example, x can represent variables of subsystems that are substantially internal to those subsystems (e.g., components that do not directly interconnect a subsystem with another subsystem). Conversely, y can represent variables of subsystems that, for example, join subsystems with other subsystems (e.g., neighboring subsystems). For example, x can represent activity internal within a number of subsystems, and y can represent an interaction between a number of subsystems (e.g., interaction between neighboring subsystems).

Corresponding dual function:

$$g(\lambda) = \min_{x,y} \left( \left( \sum_{i=1}^{N} J_i\ (x_i, y_i) \right) + \lambda^T\ (My - n) \right) \quad \text{s.t.} \quad (x_i, y_i) \in C_i,$$

can be for an assigned shadow price value , λ, separated as:

$$g(\lambda) = \left( \sum_{i=1}^{N} g_i(\lambda) \right) - \lambda^T n \quad \text{s.t.} \quad (x_i, y_i) \in C_i,$$

where $g_i$ can be independent dual problems of a number of subsystems:

$$g_i(\lambda) = \min_{x_i, y_i} J_i\ (x_i, y_i) + \lambda^T M_i y_i \quad \text{s.t.} \quad (x_i, y_i) \in C_i,$$

and where $M_i$ can be parts of M corresponding to $y_i$. As previously discussed, $y_i$ can be a part of y, and y can, for example, represent an interaction between a number of subsystems (e.g., neighboring subsystems). Note that $g_i$ can be, for example, a piecewise smooth quadratic function for quadratic $J_i$ and can be on a convex polytopic region (e.g., region of validity) $P_i$ expressed as:

$$g_i(\lambda) = \lambda^T A_i \lambda + b_i^T + c_i, \quad \lambda \in P_i, \qquad P_i = \left\{ \lambda \mid H_i \lambda \le k_i \right\},$$

where, for example, $A_i, b_i, c_i, H_i, k_i$ can represent parametric solutions of sub-problem i, and each can be obtained from determining a parametric solution and a region of validity for each of the sub-problems, according to block 106.

At block 108, method 100 includes determining a value, gradient, and hessian of a dual function for the optimization problem of the system based on the parametric solutions of the sub-problems. Determining a value, gradient, and hessian can, for example, mathematically include respectively determining:

$$\mathrm{g}(\lambda) = \left( \sum_{i=1}^{N} \lambda^T A_i \lambda + b_i^T \lambda + c_i \right) - \lambda^T \mathrm{n} ;$$

$$\nabla \mathrm{g}(\lambda) = \left( \sum_{i=1}^{N} (A_i + A_i^T) \lambda + b_i \right) - \mathrm{n} ;$$

and

$$\nabla^2 \mathrm{g}(\lambda) = \sum_{i=1}^{N} A_i + A_i^T .$$

As discussed below with reference to block 112 of method 100, the value, gradient, and hessian of the dual function can be used to determine whether a Newton step of the shadow prices lies within the intersection of the regions of validity.

At block 110, method 100 includes determining an intersection of the regions of validity of all the parametric solutions. While the number of problems for which a parametric solution was determined can also include corresponding validity regions, the validity regions may not necessarily be identical; rather they can differ to some degree. Determining an intersection of these validity regions can include determining a number of values common to all of the number of regions of validity for all the problems. For example, if a subsystem has a parametric solution valid in the region between 0.50 and 2.00, and a second subsystem has a parametric solution valid in the region between 1.70 and 3.60, an intersection of the validity regions of the two subsystems can be defined as the range of values between 1.70 and 2.00. As previously discussed in reference to block 106, regions of validity can be more complex than a simple numerical interval. Likewise, an intersection of the regions of validity can also be more complex than a simple numerical interval.

Accordingly, if the regions of validity of the parametric solutions are denoted, for example, as $P_i$, an intersection (e.g., P) of these validity regions can be defined as:

$$P = \bigcap_{i=1}^{N} P_i .$$

At block 112, method 100 includes determining whether a Newton step of the shadow prices lies within the intersection of the regions of validity. As previously discussed, the Newton step of the shadow prices can be determined from the value, gradient and hessian of the dual function (e.g., value, gradient, and hessian determined at block 108). From the value, gradient, and hessian, respectively:

$$\mathrm{g}(\lambda) = \left( \sum_{i=1}^{N} \lambda^T A_i \lambda + b_i^T \lambda + c_i \right) - \lambda^T \mathrm{n} ;$$

$$\nabla g(\lambda) = \left( \sum_{i=1}^{N} (A_i + A_i^T) \lambda + b_i \right) - n \, ;$$

and

$$\nabla^2 g(\lambda) = \sum_{i=1}^{N} A_i + A_i^T \, ,$$

a shadow prices Newton step,

$$\lambda^* = \lambda + \delta, \qquad \nabla^2 g(\lambda) \delta = -\nabla g(\lambda),$$

can be determined.

The shadow prices Newton step can be compared with the intersection of the regions of validity of all the parametric solutions. If the shadow prices Newton step lies within the intersection of the regions of validity, method 100 continues to block 114 where a determination can be made that the optimization problem of the system is solved, and for example, optimal values of the system variables have been determined. If the shadow prices Newton step does not lie within the intersection of the regions of validity, method 100 can continue to block 116 where method 100 includes updating shadow price values by, for example, a damped Newton method (e.g., using dual function value, gradient, and hessian determined at block 108).

At block 118, method 100 includes distributing the updated shadow prices to sub-problems having a region of validity that does not include the updated shadow prices. By not distributing the updated shadow price values to all subsystems of the system, method 100 can minimize the computing time (e.g., method 100 repetitions and/or partial repetitions) used to solve the problem of the system. The distribution of the updated shadow price values according to block 118 can occur in a similar fashion as the distribution previously discussed in reference to block 104.

From block 118, the distributed updated shadow price values can be used to determine a parametric solution and a region of validity for each of the sub-problems, in accordance with block 106. Each of the sub-problems can include, for example, sub-problems that received the updated shadow prices.

Figure 2 illustrates a system 230 for solving a problem associated with a system in accordance with one or more embodiments of the present disclosure. As in the example discussed in reference to Figure 1, system 230 can be a water distribution network including a number of interconnected subsystems (e.g., tanks, pumps, valves, interconnection nodes, water sources, and/ or points of water consumption, among other types of subsystems). As previously described, solving the system can, for example, include ensuring that water demands are satisfied in all points of consumption, minimizing electricity usage, ensuring tank levels are kept above a threshold, and/ or minimizing long water storage in tanks, among other problems.

System 230 can include a computing device 232 and a number of subsystems 246, 248, 250, 252, 254. Although the embodiment illustrated in Figure 2 includes five subsystems, embodiments of the present disclosure are not limited to a particular number of subsystems.

As shown in Figure 2, computing device 232 can include a number of controllers 236, 238, 240, 242, 244. Although not illustrated in Figure 2, a computing device in accordance with one or more embodiments of the present disclosure can include a single controller having a plurality of processors, or any number of controllers with a number of processors. The controllers (e.g., controllers 236, 238, 240, 242, 244) can be associated with a number of subsystems (e.g., subsystems 246, 248, 250, 252, 254). Although the embodiment illustrated in Figure 2 includes five controllers, embodiments of the present disclosure are not limited to a particular number of controllers.

As shown in Figure 2, each subsystem can be associated with a different controller. For example, subsystem 246 is associated with controller 238, subsystem 248 is associated with controller 242, subsystem 250 is associated with controller 244, etc. The number of controllers can be configured to determine a parametric solution and a region of validity for each of the number of sub-problems, for example, on a request from the coordinator 234, in accordance with one or more embodiments of the present disclosure.

In some embodiments, the number of subsystems 246, 248, 250, 252, 254 can each include a sensor and/or an actuator (e.g., sensor-actuator components 247, 249, 251, 253, 255) to link each of the subsystems with one of the number of controllers. For example, sensor-actuator component 247 can link subsystem 246 to controller 238, sensor-actuator component 249 can link subsystem 248 to controller 242, etc. A subsystem can send messages to a controller via a sensor and receive messages from a controller via an actuator.

As shown in Figure 2, the number of subsystems 246, 248, 250, 252, 254 can be interconnected such that activity in a subsystem affects a number of other subsystems. For example, in embodiments in which system 230 is a water distribution network, activity at a valve in a water distribution network can affect any number of other subsystems in the water distribution network (e.g., tanks and/or interconnection nodes) because the subsystems are interrelated by their purposes and/or places in the network.

As shown in Figure 2, computing device 232 can include a coordinator 234 coupled to the number of controllers 236, 238, 240, 242, 244. Coordinator 234 can be configured to assign one of a number of initial values to each of a number of shadow prices of the system, distribute the assigned shadow price values to a number of sub-problems, wherein each sub-problem is associated with one of a number of subsystems of the system, perform an analysis, wherein the analysis includes the coordinator being configured to receive, from a number of controllers, a parametric solution and a region of validity for each of the number of sub-problems, determine an intersection of the regions of validity of all the parametric solutions, determine whether the optimization problem is solved from the parametric solutions of the number of sub-problems, determine one or more shadow price updates based on the parametric solutions, and distribute the updated shadow prices to sub-problems having a region of validity that does not include the updated shadow prices, and repeat the analysis using the updated shadow prices until the optimization problem solution is obtained from the parametric solutions of the number of sub-problems in accordance with one or more embodiments of the present disclosure.

Figure 3 illustrates a system 360 for solving a problem associated with a system in accordance with one or more embodiments of the present disclosure. For example, system 360 can be a water distribution network including a number of interconnected subsystems (e.g., tanks, pumps, valves, interconnection nodes, water sources, and/ or points of water consumption, among other types of subsystems). As previously described, in reference to Figure 1, solving the system can, for example, include ensuring that water demands are satisfied in all points of consumption, minimizing electricity usage, ensuring tank levels are kept above a threshold, and/ or minimizing long water storage in tanks, among other problems.

The system 360 can include a number of controllers 371, 373, 375, 377, 379, coupled to a coordinator 380 associated with a number of subsystems 370, 372, 374, 376, 378. The number of controllers can be configured to determine a parametric solution and a region of validity for each of the number of sub-problems, in accordance with one or more embodiments of the present disclosure. The number of controllers can also be configured to store a part of a solution to a problem relevant to a number of variables corresponding to a subsystem with which each of the number of controllers is associated, and use a partial solution to determine a value for a number of variables of the number of problems of a subsystem with which each of the number of controllers is associated, in accordance with one or more embodiments of the present disclosure.

In some embodiments, the subsystems 370, 372, 374, 376, 378 can be interconnected such that an activity in a subsystem affects a number of other subsystems. For example, in embodiments in which system 360 is a water distribution network, activity at a water tank in a water distribution network can affect any number of other subsystems (e.g., a point of water consumption) in the system (e.g., the water distribution network). Further, in some embodiments, each subsystem can be associated with a different controller. For example, subsystem 370 is associated with controller 371, subsystem 372 is associated with controller 373, subsystem 374 is associated with controller 375, etc.

Although not illustrated in Figure 3, the number of subsystems 370, 372, 374, 376, 378 can each include a sensor and/or an actuator to link each of the subsystems with one of the number of controllers 371, 373, 375, 377, 379. For example, a subsystem can send messages to a controller via a sensor and receive messages from a controller via an actuator in a manner analogous to that previously described in connection with Figure 2.

As shown in Figure 3, system 360 can include a coordinator 380. Coordinator 380 can be configured to assign one of a number of initial values to each of a number of shadow prices of the system, distribute the assigned shadow price values to a number of sub-problems, wherein each sub-problem is associated with one of a number of subsystems of the system, perform an analysis, wherein the analysis includes the coordinator being configured to receive, from a number of controllers, a parametric solution and a region of validity for each of the number of sub-problems, determine an intersection of the regions of validity of all the parametric solutions, determine whether the optimization problem is solved from the parametric solutions of the number of sub-problems, determine one or more shadow price updates based on the parametric solutions, and distribute the updated shadow prices to sub-problems having a region of validity that does not include the updated shadow prices, and repeat the analysis using the updated shadow prices until the optimization problem solution is obtained from the parametric solutions of the number of sub-problems in accordance with one or more embodiments of the present disclosure.

The organization and/or design of the system 360 (e.g., having the number of controllers 371, 373, 375, 377, 379 each independently in communication with the coordinator 380) can allow a communication failure between a number of controllers and the coordinator 380 not to affect communication between a number of additional controllers and the coordinator 380. For example, a communication failure between controller 373 and the coordinator 380 does not affect communication between additional controllers 371, 375, 377, and/or 379.

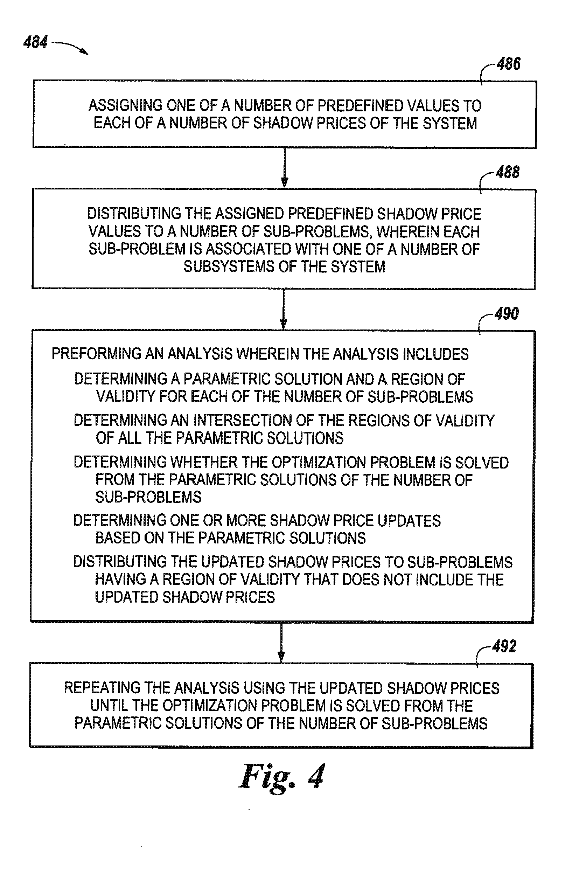

Figure 4 illustrates another method 484 of solving an optimization problem of a system in accordance with one or more embodiments of the present disclosure. The method can be performed by a computing device and/or system, such as, for example, those previously described herein in connection with Figures 2 and/or 3. Unless explicitly stated, the method embodiments described herein are not constrained to a particular order or sequence. Additionally, some of the described method embodiments, or elements thereof, can occur or be performed at the same, or substantially the same, point in time.

The system can include a number of interrelated subsystems having properties and/or solutions with similar patterns in a manner analogous to the system previously described in connection with Figure 1. Solving a problem of a system can include, for example, an optimization, (e.g., minimization or maximization) of a quadratic cost function under a number of linear constraints in a manner analogous to the system previously described in connection with Figure 1. In the example of a water distribution network, the quadratic cost function can be, for example, the cost of meeting water demands in a manner analogous to the system previously described in connection with Figure 1.

Accordingly, solving a problem of a system can include solving problems of the subsystems of the system with attention paid to the interconnected nature of the subsystems. Ultimately, the solution to the problem of the system can include determining the appropriate value of a number of variables resulting in a minimization or maximization of the quadratic cost function of the system.

At block 486, method 484 includes assigning one of a number of predefined values to each of a number of shadow prices of the system. As previously discussed, values can be real numbers. At block 488, method 484 includes distributing the assigned predefined shadow price values to a number of sub-problems, wherein each sub-problem is associated with one of a number of subsystems of the system. As previously discussed with reference to Figures 2 and 3, a coordinator can be communicatively linked with the number of subsystems in the system. The coordinator can distribute the values that were assigned, according to block 486, to each of the number of shadow prices of a number of sub-problems, wherein each sub-problem is associated with one of a number of subsystems.

At block 490, method 484 includes performing an analysis, wherein the analysis includes determining a parametric solution and a region of validity for each of the number of sub-problems, determining an intersection of the regions of validity of all the parametric solutions, determining whether the optimization problem is solved from the parametric solutions of the number of sub-problems, determining one or more shadow price updates based on the parametric solutions, and distributing the updated shadow prices to sub-problems having a region of validity that does not include the updated shadow prices. As previously described herein, a parametric solution can be a solution that is valid for more than a single value of a number of given shadow prices; it can be valid anywhere within the region of validity. A parametric solution can be associated with a region of validity in a manner analogous to the system previously described in connection with Figure 1. As previously discussed, the region of validity can be a region (e.g., a set of numeric values) within which the parametric solution can be valid. Conversely, a parametric solution can be invalid for values of a shadow price that fall outside the region of validity in a manner analogous to the system previously described in connection with Figure 1. Though a region of validity, as used herein, can be a numeric interval, region of validity is not limited to a numeric interval; rather, region of validity can encompass values not part of an interval, as previously described herein. Each subsystem to which a shadow price value was distributed can determine its corresponding parametric solution and validity region in a manner analogous to the system previously described in connection with Figure 1.

An intersection of the regions of validity for all the parametric solutions can be determined, for example, in a manner analogous to that of block 106 of Figure 1. Determining whether the optimization problem is solved from the parametric solutions of the number of sub-problems can include, for example, determining a Newton step of shadow prices in a manner analogous to that described in connection with block 112 of Figure 1. Determining one or more shadow price updates based on the parametric solutions can be carried out, for example, by a damped Newton method in a manner analogous to the system previously described in connection with Figure 1. Distributing the updated shadow prices to sub-problems having a region of validity that does not include the updated shadow prices can be done, for example, in a manner analogous to the discussion in connection with block 118 of Figure 1.

At block 492, method 484 includes repeating the analysis using the updated shadow prices until the optimization problem is solved from the parametric solutions of the number of sub-problems. Repeating the analysis can include, for example, repeating the steps of block 490 until, for example, a Newton step of the shadow prices lies within the intersection of the regions of validity in a manner analogous to that previously discussed in connection with Figure 1.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computer-implemented method (100, 484) of solving an optimization problem of a system (230, 360), comprising:

   assigning (102, 486) one of a number of predefined values to each of a number of shadow prices of the system (230, 360);

   distributing (104, 488) the assigned predefined shadow price values to a number of sub-problems, wherein each sub-problem is associated with one of a number of subsystems (246, 248, 250, 252, 254, 370, 372, 374, 376, 378) of the system (230, 360);

   performing (490) an analysis, wherein the analysis includes:

   determining (106, 490) a parametric solution and a region of validity for each of the number of sub-problems;

   determining (110, 490) an intersection of the regions of validity of all the parametric solutions;

   determining (112, 114, 490) whether the optimization problem is solved from the parametric solutions of the number of sub-problems;

   determining (116, 490) one or more shadow price updates based on the parametric solutions; and

   distributing (118, 490) the updated shadow prices to sub-problems having a region of validity that does not include the updated shadow prices; and

   repeating (492) the analysis using the updated shadow prices until the optimization problem is solved from the parametric solutions of the number of sub-problems..

2. The method (100, 484) of claim 1, wherein determining (106, 490) a region of validity for each of the sub-problems includes determining a range of numeric values within which the parametric solution for each of the sub-problems is valid.

3. The method (100, 484) of claim 1, wherein the intersection of the regions of validity includes a number of values common to all of the number of regions of validity for all of the parametric solutions.

4. The method (100, 484) of claim 1, wherein the method (100, 484) includes determining (108) a value, a gradient, and a hessian of the dual function for the optimization problem of the system (230, 360) based on the parametric solutions of the sub-problems.

5. The method (100, 484) of claim 1, wherein determining (106, 490) a region of validity for each of the sub-problems includes determining a set of shadow price values within which the parametric solution for each of the sub-problems is valid.

6. The method (100, 484) of claim 1, wherein the optimization problem of the system (230, 360) is solved (114) if a Newton step of the shadow prices lies within the intersection of the regions of validity.

7. The method (100, 484) of claim 1, wherein the method (100, 484) includes determining (116, 490) one or more shadow price updates by a damped Newton method.

8. The method (100, 484) of claim 1, wherein the number of subsystems (246, 248, 250, 252, 254, 370, 372, 374, 376, 378) are interconnected such that an activity in a subsystem (246, 248, 250, 252, 254, 370, 372, 374, 376, 378) affects a number of other subsystems (246, 248, 250, 252, 254, 370, 372, 374, 376, 378).

9. The method (100, 484) of claim 1, wherein the method (100, 484) is implemented by a computing device (232) having a number of controllers (236, 238, 240, 242, 244), wherein each subsystem (246, 248, 250, 252, 254) of the system (230) is associated with a different controller (236, 238, 240, 242, 244).

10. The method (100, 484) of claim 1, wherein the method (100, 484) is implemented by a system (360) having a coordinator (380) configured to communicate with a number of controllers (371, 373, 375, 377, 379) such that a communication failure between a number of controllers (371, 373, 375, 377, 379) and the coordinator (380) does not affect communication between a number of additional controllers (371, 373, 375, 377, 379) and the coordinator (380).

100

102

ASSIGN VALUES TO SHADOW PRICES

104

DISTRIBUTE THE ASSIGNED SHADOW PRICE VALUES
TO A NUMBER OF SUB-PROBLEMS OF SUBSYSTEMS

106

DETERMINE A PARAMETRIC SOLUTION AND A REGION
OF VALIDITY FOR EACH OF THE SUB-PROBLEMS

108

DETERMINE VALUE, GRADIENT, AND HESSIAN OF A
DUAL FUNCTION FOR THE OPTIMIZATION PROBLEM
OF THE SYSTEM BASED ON THE
PARAMETRIC SOLUTIONS OF THE SUB-PROBLEMS

110

DETERMINE AN INTERSECTION OF THE REGIONS
OF VALIDITY OF ALL THE PARAMETRIC SOLUTIONS

112

DETERMINE WHETHER A NEWTON STEP OF THE
SHADOW PRICES LIES WITHIN THE INTERSECTION
OF THE REGIONS OF VALIDITY

116

NO

YES

114

UPDATE SHADOW PRICES BY
DAMPED NEWTON METHOD

OPTIMIZATION
PROBLEM OF THE SYSTEM
IS SOLVED

118

DISTRIBUTE THE UPDATED SHADOW PRICES TO  SUB-PROBLEMS
HAVING A REGION OF VALIDITY THAT DOES NOT INCLUDE
THE UPDATED SHADOW PRICES

*Fig. 1*

**Fig. 2**

*Fig. 3*

484 —

486

ASSIGNING ONE OF A NUMBER OF PREDEFINED VALUES TO
EACH OF A NUMBER OF SHADOW PRICES OF THE SYSTEM

488

DISTRIBUTING THE ASSIGNED PREDEFINED SHADOW PRICE
VALUES TO A NUMBER OF SUB-PROBLEMS, WHEREIN EACH
SUB-PROBLEM IS ASSOCIATED WITH ONE OF A NUMBER OF
SUBSYSTEMS OF THE SYSTEM

490

PREFORMING AN ANALYSIS WHEREIN THE ANALYSIS INCLUDES

  DETERMINING A PARAMETRIC SOLUTION AND A REGION OF
    VALIDITY FOR EACH OF THE NUMBER OF SUB-PROBLEMS

  DETERMINING AN INTERSECTION OF THE REGIONS OF VALIDITY
    OF ALL THE PARAMETRIC SOLUTIONS

  DETERMINING WHETHER THE OPTIMIZATION PROBLEM IS SOLVED
    FROM THE PARAMETRIC SOLUTIONS OF THE NUMBER OF
    SUB-PROBLEMS

  DETERMINING ONE OR MORE SHADOW PRICE UPDATES
    BASED ON THE PARAMETRIC SOLUTIONS

  DISTRIBUTING THE UPDATED SHADOW PRICES TO SUB-PROBLEMS
    HAVING A REGION OF VALIDITY THAT DOES NOT INCLUDE THE
    UPDATED SHADOW PRICES

492

REPEATING THE ANALYSIS USING THE UPDATED SHADOW PRICES
UNTIL THE OPTIMIZATION PROBLEM IS SOLVED FROM THE
PARAMETRIC SOLUTIONS OF THE NUMBER OF SUB-PROBLEMS

*Fig. 4*

Europäisches
Patentamt

European
Patent Office

Office européen
des brevets

# EUROPEAN SEARCH REPORT

**Application Number**

EP 11 15 7244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Trnka P et al: "Algorithms for higher-level real-time optimization and their cooperation with decentralized/distributed MPC", European Commission FP7 Project WIDE Decentralized Wireless Control of Large-Scale Systems, Deliverable D3.3, version 1.0, 28 February 2011 (2011-02-28), XP55022342, Retrieved from the Internet: URL:http://www.wide.dii.unisi.it/deliverables/D3.3.pdf [retrieved on 2012-03-20] * section 5 * | 1-10 | INV. G06F17/11 G05B13/04 |
| A | Trnka P et al: "Decentralized and distributed model predictive control and estimation algorithms", European Commission FP7 Project WIDE Decentralized Wireless Control of Large-Scale Systems, Deliverable D3.2, version 1.1, 10 October 2010 (2010-10-10), XP55022339, Retrieved from the Internet: URL:http://www.wide.dii.unisi.it/deliverables/D3.2.pdf [retrieved on 2012-03-20] * section 2 * | 1-10 | |
| | | | **TECHNICAL FIELDS SEARCHED (IPC)** |
| | | | G06F G05B G06Q |
| A | CHENG R ET AL: "Price-driven coordination method for solving plant-wide MPC problems", JOURNAL OF PROCESS CONTROL, vol. 17, no. 5, 13 March 2007 (2007-03-13), pages 429-438, XP005931754, ISSN: 0959-1524, DOI: 10.1016/J.JPROCONT.2006.04.003 * sections 1-3; figures 2, 3 * | 1-10 | |

-/--

The present search report has been drawn up for all claims

| Place of search | Date of completion of the search | Examiner |
|---|---|---|
| Berlin | 21 March 2012 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 11 15 7244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Samar S et al: "Distributed estimation via dual decomposition", Proceedings of the European Control Conference 2007, 2-5 July 2007, Kos, Greece, July 2007 (2007-07), pages 1511-1516, XP55022390, Retrieved from the Internet: URL:http://www.stanford.edu/~boyd/papers/pdf/distr_estim_ecc.pdf [retrieved on 2012-03-20] * sections I and IV * ----- | 1-10 | |
| T | TRNKA P ET AL: "Application of Distributed MPC to Barcelona water distribution network", PREPRINTS OF THE 18TH IFAC WORLD CONGRESS, 28 AUGUST - 2 SEPTEMBER 2011, MILANO, ITALY, 28 August 2011 (2011-08-28), pages 9139-9144, XP55022324, * the whole document * ----- | 1-10 | |

**TECHNICAL FIELDS SEARCHED (IPC)**

The present search report has been drawn up for all claims

| Place of search | Date of completion of the search | Examiner |
|---|---|---|
| Berlin | 21 March 2012 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**EUROPEAN SEARCH REPORT**

Application Number

EP 11 15 7244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Samar S et al: "Distributed estimation via dual decomposition", Proceedings of the European Control Conference 2007, 2-5 July 2007, Kos, Greece, July 2007 (2007-07), pages 1511-1516, XP55022390, Retrieved from the Internet: URL:http://www.stanford.edu/~boyd/papers/pdf/distr_estim_ecc.pdf [retrieved on 2012-03-20] * sections I and IV * | 1-10 | |
| T | TRNKA P ET AL: "Application of Distributed MPC to Barcelona water distribution network", PREPRINTS OF THE 18TH IFAC WORLD CONGRESS, 28 AUGUST - 2 SEPTEMBER 2011, MILANO, ITALY, 28 August 2011 (2011-08-28), pages 9139-9144, XP55022324, * the whole document * | 1-10 | |
| | | | **TECHNICAL FIELDS SEARCHED    (IPC)** |

The present search report has been drawn up for all claims

| Place of search | Date of completion of the search | Examiner |
|---|---|---|
| Berlin | 21 March 2012 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)